# EUROPÄISCHE PATENTSCHRIFT

(11) **EP 3 019 797 B1**
(45) Veröffentlichungstag und Bekanntmachung des Hinweises auf die Patenterteilung: **12.09.2018**
(21) Anmeldenummer: 14739104.9
(22) Anmeldetag: 08.07.2014
(51) Int. Cl.: F24S 20/20, F24S 23/74, F24S 40/50, F24S 40/52, F24S 40/57, F24S 40/42

(54) **SOLARKOLLEKTORANORDNUNG**
SOLAR COLLECTOR ARRANGEMENT
ENSEMBLE CAPTEUR SOLAIRE

(30) Priorität: 10.07.2013 DE 102013011780; 15.11.2013 DE 102013112607
(43) Veröffentlichungstag der Anmeldung: 18.05.2016
(73) Patentinhaber: Innovative Motion GmbH, 13599 Berlin (DE)
(72) Erfinder: LEBERER, Thomas, 13599 Berlin (DE)
(74) Vertreter: Weisse, Renate
(86) Internationale Anmeldenummer: PCT/EP2014/064556
(87) Internationale Veröffentlichungsnummer: WO 2015/004113

(56) Entgegenhaltungen:
- WO-A1-2012/123433
- WO-A2-2007/146183
- WO-A2-2009/146215
- WO-A2-2011/141737
- WO-A2-2012/025849
- WO-A2-2012/128877
- WO-A2-2013/028522
- DE-A1- 2 635 436
- FR-A1- 2 396 245
- JP-A- S5 813 959

## Beschreibung

### Technisches Gebiet

Die Erfindung betrifft eine Solarkollektor-Anordnung enthaltend
(a) eine mit Solarenergie beaufschlagte Rohrleitung, durch welche eine Fluidströmung hindurchleitbar ist, so dass die Solarenergie auf das Fluid übertragbar ist,
(b) eine Reflektoranordnung mit einem gekrümmter Reflektor zum Bündeln von Sonnenstrahlung im Bereich der Rohrleitung, und
(c) einen Antrieb zum Nachführen der Reflektoranordnung derart, dass die Sonnenstrahlung auf die Rohrleitung reflektiert wird.

Die Erfindung betrifft ferner ein Verfahren zum Betrieb einer solchen Anordnung.

Wenn der in der Anordnung verwendete Reflektor einen parabolischen Querschnitt hat, wirkt der Reflektor wie eine Zylinderlinse. Die praktisch parallel auf die Erdoberfläche auftreffende Sonnenstrahlung wird auf eine Linie fokussiert. Hierzu wird der Reflektor der Sonnenbewegung nachgeführt. In der Fokallinie verläuft eine Rohrleitung. Die Rohrleitung ist von einem Fluid, beispielsweise Wasser oder Öl, durchflossen. Auf diese Weise wird die auftreffende Solarenergie auf das Fluid übertragen. Das heiße Fluid steht dann zur weiteren Verwendung, etwa für Heizung, Stromerzeugung oder als Prozessenergie zur Verfügung.

Zur optimalen Nutzung der auftreffenden Solarenergie ist eine hohe Formtreue des Reflektors und eine gute Nachführung wichtig.

### Stand der Technik

DE 10 2011 056 790 A1 beschreibt einen Parabolrinnenkollektor. Mit dem Kollektor wird Sonnenstrahlung eingefangen und auf eine Absorberleitung reflektiert. In der Absorberleitung zirkuliert ein Wärmeträgermedium. Die Parabolrinnen weisen eine Tragstruktur auf, auf welcher Spiegelelemente angeordnet sind, die dem Sonnenlauf nachgeführt werden. Die Parabolrinnen sind auf Pylonen gehalten. Jeweils ein Pylon ist mit einem Bandantrieb als Antriebspylon ausgebildet, der an einem Ende der Parabolrinne angreift. Zur Aufrechterhaltung des parabelförmigen Querschnitts über die gesamte Länge wird der Reflektor derart vorgeformt, dass sich die Parabel erst bei Berücksichtigung der Verdrillung ausbildet.

Bekannte Parabolrinnenkollektoren sind vergleichsweise groß. Sie sind aufwändig zu installieren. Außerdem ist es schwierig eine hohe Formtreue über die gesamte Länge der Parabolrinne aufrecht zu erhalten.

Die Lebensdauer bekannter Solarkollektoren wird wesentlich durch die Wetterbedingungen bestimmt, denen die Kollektoren ausgesetzt sind. Bei Überhitzung werden die Bauteile übermäßig beansprucht. Bei starkem Wind entstehen Kräfte und Vibrationen, welche die mechanischen Bauteile auf Dauer schädigen können. Kondensation von Wasserdampf an dem Reflektor oder der Abdeckung führt zur Absorption oder Reflektion von Sonnenstrahlung und reduziert so die nutzbare Energie.

US 2009/0314283 A1 offenbart Solarkollektoren, bei denen Licht mit langgestreckten Spiegeln auf ein Rohr fokussiert wird. Es sind ferner Motoren vorgesehen, mit denen die Anordnung der Sonne nachgeführt wird. Die Druckschrift offenbart darüberhinaus eine Nachführung der Anordnung an den Sonnenstand. Die Maßnahmen zum Schutz der Anordnung vor Umwelteinflüssen beschränken sich auf eine transparente Abdeckung und Dichtungen der Verbindungen.

WO 2010/142666 A2 offenbart Solarkollektoren, bei denen Licht mittels Reflektoren auf eine Rohrleitung fokussiert wird. Die Rohrleitung wird von Haltern gehalten, welche in regelmäßigen Abständen entlang des Reflektors angeordnet sind. Es ist weiterhin offenbart, dass eine Nachführung vorgesehen ist.

WO 2013/028522 A2 offenbart Solarkollektoren, bei denen Licht mittels Reflektoren auf eine Rohrleitung fokussiert wird. Der Reflektor sitzt in einem Rahmen, der drehbar auf Stützen montiert ist. Ein Antrieb führt eine Nachführung aus. Die Rohrleitung ist mit Befestigungen am Rahmen befestigt. Mit dem Antrieb wird der Rahmen rotiert. Weiterhin sind Sensoren offenbart, mit denen die Nachführung zusätzlich oder statt eines gespeicherten Algorithmus gesteuert werden kann.

WO 2012/128877 A2 offenbart eine große, offene Solarkollektor-Anordnung, welche in einem Glashaus angeordnet ist. Die Reflektoren hängen ebenso wie die Rohrleitungen an einer Struktur, die vom Dach des Glashauses o.ä. gebildet ist. Hierzu werden Aufhänger mit einer rotierenden Verbindung verwendet. Das Gewicht wird vom Dach aufgenommen. Die Reflektoren sind mehrteilig ausgeführt und werden vor Ort montiert. Dazu sind Befestigungselemente und justierbare Kabel vorgesehen. Die an Kabeln aufgehängten Reflektoren können durch Zug an den Kabeln mittels Seilzug in ihrer Lage verändert werden.

WO 2011/141737 A2 beschreibt eine Reflektoranordnung mit einem Antrieb. Der Reflektor rotiert um seine Fokalachse, in der auch die Rohrleitung liegt. Die Reflexionsanordnung ist drehbar über ein Lager an einem festen Rahmen befestigt und die Rohrleitung ist durch einen Zapfenring und einen Schneckentrieb 48 geführt, ohne mit diesem in Kontakt zu stehen. Nachteilig bei dieser Anordnung ist es, dass die Rohrleitung an wenigstens einer Stelle aufgebrochen werden muss, um den Zapfenring und den Schneckentrieb aufzufädeln. Eine werkseitige Vormontage als Ganzes ist bei dieser Anordnung nicht möglich.

WO 2007/146183 A2 offenbart eine geschlossene Reflektoranordnung, bei der der Reflektor in einem Gehäuse mit einem schienenförmigen Gehäuseboden angeordnet ist. An der Schiene sind Stützen montiert, in denen eine Rohrleitung gehalten ist. Über einen Riementrieb an der Schiene wird die Anordnung der Sonne nachgeführt. Dabei wird die Kraft auf die Schiene oder drehbeweglich gelagerte Stirnflächen der Reflektoranordnung übertragen. In gleicher Weise offenbaren WO 2009/146215 A2 und WO 2012/025849 A2 Anordnungen, bei denen ein Reflektor über einen Riementrieb der Sonne nachgeführt wird.

### Offenbarung der Erfindung

Es ist Aufgabe der Erfindung, eine Vorrichtung der eingangs genannten Art zu schaffen, die besonders wirtschaftlich ist und eine hohe Lebensdauer bei höchster Funktionalität hat. Erfindungsgemäß wird die Aufgabe mit einer Anordnung der eingangs genannten Art dadurch gelöst, dass
(d) Mittel zum drehbeweglichen, lösbaren Befestigen der Reflektoranordnung an der Rohrleitung vorgesehen sind, und
(e) der Antrieb von einem Motor gebildet ist, der an oder in der drehbeweglichen Reflektoranordnung befestigt ist.
Der Antrieb, die Steuerung und die Stromversorgung bilden also mit der Reflektoranordnung ein Modul, das werksseitig vollständig montiert werden kann. Die Rohrleitung oder der Absorber muss nicht geöffnet oder demontiert werden. Vor Ort ist nur eine fluiddurchflossene Rohrleitung bereitzustellen, an der die Reflektoranordnung als Ganzes montiert wird. Die Montage vor Ort erfordert nur geringe Fachkenntnis, ist weniger fehlerbehaftet und erfolgt wesentlich schneller als bei Aufbau einer Anlage aus mehreren Komponenten. Als Rohrleitung ist jedes Wärmerohr (Heatpipe) oder sonstige energieführende Medium geeignet. Vorzugsweise ist der Antrieb mit einem Getriebe an einer Stirnwand der Reflektoranordnung angeordnet.
Vorzugsweise umfassen die Mittel zum Befestigen der Reflektoranordnung an der Rohrleitung:
(a) ein erstes Klemmelement;
(b) ein zweites Klemmelement zum Verbinden mit dem ersten Klemmelement, wobei die Reflektoranordnung drehbeweglich gelagert ist.

Des erste Klemmelement kann dabei eine integrierte Fassung für das Lager aufweisen.

Das erste und das zweite Klemmelement können insbesondere einen halbringförmigen Querschnitt haben und jeweils eine Ringnut aufweisen zur Aufnahme eines Lagerelements für die drehbewegliche Lagerung der Reflektoranordnung um die Rohrleitung. Dann sind die Lagerelemente als Halbschalen-Lager ausgebildet, das auf ein geschlossenes energieabführendes System, wie einer Rohrleitung befestigt werden kann, ohne in das energieabführende System einzugreifen. Die Reflektoranordnung wird mit einem der Klemmelemente an die Rohrleitung angelegt. Mit dem anderen, komplementären Klemmelement wird die Anordnung angeschraubt oder auf andere Weise, beispielsweise mit Einrastvorrichtungen oder Bajonettverschlüssen lösbar befestigt. Alle übrigen Funktionalitäten sind bereits an den Komponenten der Anordnung verwirklicht, so dass keine weitere Justage oder Montage erforderlich ist.

Mit einer solchen Anordnung ist die Reflektoranordnung an der Rohrleitung mittels eines Gleitlagers drehbar gelagert. Dies hat gegenüber einem Kugellager den Vorteil, dass praktisch kein Sand an die Lagerflächen des Gleitlagers gelangen kann, was für die Verwendung des Solarkollektors in der Wüste vorteilhaft ist. Die mindestens zwei Rohrleitungs-Lagerschalen des Gleitlagers umgreifen die Rohrleitung und sind mit dieser drehfest verbunden. Mindestens zwei Reflektor-Lagerschalen sind mit der Reflektoranordnung drehfest verbunden. Vorzugsweise bestehen das Gleitlager bzw. dessen Lagerschalen aus Keramikmaterial, aus PTFE oder einem anderen hitzebeständigen Material. PTFE ist ausreichend hitzebeständig und für Absorbertemperaturen von 200°C oder noch darüber geeignet und bietet eine geringe Reibung an den aneinander gleitenden PTFE / PTFE -Oberflächen des Gleitlagers.

Vorzugsweise ist vorgesehen, dass an jedem Ende der Reflektoranordnung Mittel zum lösbaren Befestigen der Reflektoranordnung an der Rohrleitung vorgesehen sind, die über eine Welle miteinander verbunden sind, so dass die vom Antrieb auf die Reflektoranordnung ausgeübte Kraft zumindest teilweise über die Welle auf das andere Ende der Reflektoranordnung übertragbar ist. Bei dieser Ausgestaltung ist nur ein Antrieb erforderlich. Die Übertragung der Kraft erfolgt nicht über den Reflektor, sondern über eine zusätzliche Welle. Die Welle verläuft parallel zur Rohrleitung. Auf diese Weise wird eine unerwünschte Verformung des Reflektors vermieden.

Die Reflektoranordnung kann vollständig autark arbeiten. Wenn Solarzellen zur Energieversorgung des Antriebs eingesetzt werden, brauchen keine weiteren Verkabelungen und Anschlussarbeiten durchgeführt werden. Die Solarzellen und der Antrieb können besonders klein ausgeführt werden, wenn ein Niederspannungs-Gleichstrommotor (DC) und ein Getriebe eingesetzt werden. Die erforderliche Kraft, die der Motor ohne weitere Maßnahmen nicht hat, kann über ein Getriebe mit geeignetem Übersetzungsverhältnis erzeugt werden. Die Energieversorgung des Antriebs und der Steuerung kann auch durch einen elektrothermischen Wandler innerhalb des Solarkollektors erfolgen. Dabei ist vorzugsweise ein Speicher, beispielsweise ein Akkumulator vorgesehen, der eine ordnungsgemäße Funktion des Antriebs und der Steuerung auch im Dunkeln oder bei ungünstigen Witterungsverhältnissen erlaubt.

Für die Nachführung können ein Sonnenstand-Sensor und/oder ein Sonnenaufgang/Sonnenuntergang-Sensor und eine Steuerungseinheit vorgesehen sein, mittels welcher unter Verwendung von Sonnenstand-Sensordaten der Antrieb angesteuert werden kann.

Anhand der eingelesenen Sensordaten wird die wahrscheinliche Position der Sonne vorausberechnet und angefahren. Dadurch wird das System gegenüber Fremdlichtstörungen unempfindlicher. Auch die Ermittlung der Tageszeit sowie des Jahrestags ist somit möglich.

Bei einer besonders bevorzugten Ausgestaltung der Erfindung ist jeweils ein Temperatursensor zur Erfassung der Temperatur an jedem Ende der Reflektoranordnung vorgesehen. Die Temperatursensoren können an den Drehlagern der Klemmelemente befestigt sein. Es wird dabei die Eingangstemperatur am Eingang der Rohrleitung und die Ausgangstemperatur am Ausgang der Rohrleitung gemessen. Mit den Temperaturen kann festgestellt werden, ob Überhitzungsgefahr droht. Wenn dies der Fall ist, kann eine Bewegung der Reflektoranordnung aus dem Fokus heraus ausgelöst werden. Dann wird weniger Solarenergie auf die Rohrleitung geleitet, so dass die Temperatur gesenkt und eine Überhitzung vermieden werden kann. Alternativ oder zusätzlich kann auch die Fluidströmung durch die Rohrleitung erhöht oder verringert werden um eine Temperaturänderung zu bewirken. Bei einer einfacheren Ausgestaltung der Erfindung ist ein Temperatursensor nur auf der Ausgangsseite vorgesehen.

Bei einer besonders vorteilhaften Ausgestaltung der Erfindung ist vorgesehen:
(a) ein an einem ersten Ende der Reflektoranordnung vorgesehener Wandler mit einer Lichtquelle zur Umwandlung von Temperaturdaten des Temperatursensors an diesem Ende in ein optisches Signal,
(b) ein am gegenüberliegenden zweiten Ende der Reflektoranordnung angeordneter Detektor zum Empfang des optischen Signals, und
(c) ein Wandler mit einem Sender zur Übertragung von Temperaturdaten des ersten und zweiten Temperatursensors an eine Steuerung.

Bei dieser Ausgestaltung der Erfindung ist keine Verkabelung und kein Anschließen von elektrischen oder sonstigen Anschlüssen erforderlich. Das Temperatursignal wird als optisches Signal übertragen. Die optische Übertragung erfolgt kabellos durch die Luft. Dieser Übertragungsweg ist unempfindlich. Nach Konvertierung in ein geeignetes elektrisches Signal kann die Temperatur über Kabel oder drahtlos, beispielsweise über Infrarot- oder Bluetooth, an eine Steuerung gesendet werden. Die Steuerung kann den Volumenstrom des Fluids in der Rohrleitung einstellen oder den Antrieb an der Reflektoranordnung betätigen.

Bei einer besonders bevorzugten Ausgestaltung der Erfindung weist die Reflektoranordnung eine oder mehrere Längsverstärkungen parallel zur Rohrleitung und/oder Spanten quer zur Rohrleitung auf. Die Spanten sind entsprechend der Profillinie des Reflektors gekrümmt. Ein solches Verstärkungsgerüst aus steifem Material, etwa Aluminium oder dergleichen, erhöht die Formstabilität des Reflektors. Dabei können die Längsverstärkungen von Profilleisten mit einem T-förmigen oder H-förmigen Querschnitt gebildet sein. Die T-Profile werden mit der ebenen oberen Fläche des T-Profils an den Reflektorkanten montiert. Der Reflektor behält durch das Verstärkungsgerüst seine Form im Einsatz und bei Transport, Lagerung und Montage.

Vorzugsweise ist ein Beschleunigungssensor an der Reflektoranordnung vorgesehen. Der Beschleunigungssensor erfährt eine Gravitationskraft. Aus der bei Bewegung der Reflektoranordnung ausgeübten Gravitationskraft lässt sich die genaue Lage errechnen. Der Beschleunigungssensor kann eindimensional, zweidimensional oder dreidimensional ausgebildet sein. Das Ergebnis kann zusammen mit dem Datum und der Geoposition des Standorts zur Nachführung der Reflektoranordnung zur Sonne verwendet werden. Alternativ ist ein Detektor vorgesehen.

Aus den Signalen des Beschleunigungssensors lassen sich weiterhin Vibrationen erfassen. Solche Vibrationen treten beispielsweise bei Wind auf und können hohe Frequenzen annehmen. Die Vibrationen sind unerwünscht und beeinflussen die Lebensdauer der Anordnung. Wenn Vibrationen festgestellt werden, deren Frequenzen und/oder Amplituden einen ausgewählten Schwellwert überschreiten, wird die Reflektoranordnung mit dem Antrieb bewegt, bis die Vibrationen ein Minimum annehmen. Auf diese Weise wird die Anordnung geschont und die Lebensdauer verlängert.

Starker Wind kann große Kräfte auf die Reflektoranordnung ausüben, welche die Anlage beschädigen können. Zur Vermeidung solcher Schäden wird der für eine Rotationsbewegung der Reflektoranordnung erforderliche Drehimpuls ermittelt. Dies kann in der Weise erfolgen, dass der für die Betätigung des Motors erforderliche Strom erfasst wird. Überschreitet der Drehimpuls einen Schwellwert, so wird der "Sturmfall" angenommen. Dann wird die Reflektoranordnung nicht mehr der Sonne nachgeführt, sondern in den Wind gestellt. Dies erfolgt in der Weise, dass die Reflektoranordnung in die Position gebracht wird, bei der die Bewegung den geringsten Drehimpuls benötigt, d.h. bei der der geringste Strom für eine Bewegung erforderlich ist.

Zusätzlich können an der Aussenseite Windbrecher-Formationen vorgesehen sein. Dadurch werden Tragflügel-Effekte am Solarkollektor vermieden, die bei starkem Wind zu Betriebsstörungen oder Beschädigungen des Solarkollektors führen können.

Vorzugsweise ist vorgesehen, dass die Reflektoranordnung mit dem Reflektor und einem lichtdurchlässigen Deckel einen geschlossenen Raum umschließt und der Raum mit einer Membran zur Außenumgebung versehen ist, welche Stickstoffmoleküle, Sauerstoffmoleküle und andere kleinere Gasmoleküle durchlässt, und für Wassermoleküle zumindest in Richtung Innenraum undurchlässig ist.

Der Deckel schützt den Reflektor und die mechanischen Komponenten vor Verunreinigung und Witterungseinflüssen. Zusätzlich kann der Deckel mit einer optischen Antireflexbeschichtung für Sonnenstrahlung belegt sein. Weiterhin kann eine Antihaftbeschichtung zur Schmutzabweisung auf dem Deckel vorgesehen sein. In seiner einfachsten Ausgestaltung ist der Deckel eine beschichtete Glasscheibe. Neben Schutz der Reflektoroberfläche vor Verschmutzung bildet der geschlossene Raum zusätzlich einen Wärmepuffer mit dem Temperaturschwankungen abgeschwächt werden können.

Problematisch ist es, dass Wasserrückstände in dem geschlossenen Raum bei Temperatur- und Druckschwankungen zu störendem Wasserkondensat führen können. Ein Vakuum ist aufwändig zu realisieren und Druckschwankungen führen zu Undichtigkeiten. Die Verwendung einer wasserundurchlässigen Membran erlaubt einen Druckausgleich durch Gase wie Stickstoff oder Sauerstoff, die immer in der Luft enthalten sind. Für die Entfernung von Restwasser kann ein hygroskopisches Material in dem geschlossenen Raum vorgesehen sein. Da weiteres Wasser durch die Membran nicht eindringen kann, reicht eine kleine Menge des Materials aus um für trockene Luft zu sorgen, die Kondensation verhindert.

Eine Ventilmembran enthält beispielsweise an ihrer inneren Oberfläche einen luftdurchlässigen hygroskopischen Bereich, während der restliche Bereich der Ventilmembran ein luftdurchlässiger hydrophober Bereich ist. Der hygroskopische Bereich kann als hygroskopische Beschichtung des hydrophoben Membranmaterials ausgebildet sein. Diese Ventilmembran ermöglicht wegen ihrer Durchlässigkeit für O₂ und N₂ einerseits einen Druckausgleich zwischen dem Kollektorraum und der Aussenumgebung und andererseits eine Trocknung der Atmosphäre im Kollektorraum. Dies wiederum ermöglicht die Verwendung dünnerer Glasplatten als Abdeckung und verhindert die Bildung von Kondenswasser oder Eis z.B. während eines Tag/Nacht-Temperaturzyklus oder während eines Sommer/Winter-Temperaturzyklus.
Zur weiteren Vermeidung von Verunreinigungen und Schäden durch Witterung ist vorgesehen, dass die Anordnung nachts nach unten gekippt wird, d.h. dass der Reflektor oberhalb der Rohrleitung mit der Außenseite nach oben angeordnet ist. Von oben auftreffender Regen, Partikel, Laub und dergleichen trifft dann nicht auf die Lichteintrittsseite, sondern auf die unempfindliche Außenseite der Anordnung.

Bei einem erfindungsgemäßen Verfahren zum Betrieb einer Solarkollektor-Anordnung gemäß der Erfindung, mit den Schritten:
(a) Ermitteln des Sonnenstands;
(b) Ausrichten der Reflektoranordnung; und
(c) Leiten eines Fluids durch die Rohrleitung zur Absorption von Sonnenwärme; dadurch gekennzeichnet, dass
(d) die Reflektoranordnung bewegt wird,
(e) die Trägheit der Reflektoranordnung bei der Bewegung ermittelt wird, und
(f) die Reflektoranordnung bei Überschreiten eines Schwellwertes für die Trägheit in eine Lage bewegt wird, bei der die auf die Reflektoranordung wirkenden Kräfte ein Minimum annehmen.
Die Anordnung kann in großer Vielzahl fluidseitig in nacheinander oder parallel geschalteten Solarkollektoren eingesetzt werden. Des Weiteren kann vorgesehen sein, dass
- die Temperatur an der Rohrleitung erfasst wird; und
- die Reflektoranordnung derart ausgerichtet wird, dass die erfasste Temperatur unterhalb eines ausgewählten Schwellwerts liegt.

Bei Verwendung eines analogen oder digitalen Regelwerkes kann weiterhin vorgesehen sein, dass nach dem Ermitteln des Sonnenstandes mit Hilfe des Beschleunigungssensors und Fotosensoren, die genaue Tageszeit und der genaue Jahrestag berechnet wird.
Bei Verwendung einer Temperatur-Regelung ist es vorteilhaft, wenn jeder Sonnenkollektor mit einer definierten Soll-Temperatur, die am Einlass und Auslass des Rohres nicht überschritten werden darf, werkseitig voreingestellt wird und/oder am Einsatzort manuell nachgeregelt werden kann.
Bei Verwendung eines Funkempfängers in der Steuerung kann die Reflektoranordnung von außen prophylaktisch beim Überschreiten zu hoher Vibrationen oder zu starker Verdrehungskräfte, in einen Not-Betriebsmodus versetzt wird, bei dem der Solarkollektor mit seinem Deckel nach unten ausgerichtet werden.
Es kann ein Beschleunigungssensor in der Steuerung eingesetzt werden, mit dem Vibrationen insbesondere durch Wind gemessen werden, wobei die Reflektoranordnung bei Überschreiten zu hoher Vibrationen die Reflektoranordnung in eine Position gedreht wird, bei der die Vibrationen sich minimieren oder aufheben.

Bei Verwendung eines Funksenders in der Steuerung, wird ermöglicht, dass alle verfügbaren Daten der Reflektoranordnung zu beliebigen Zeiten nach draußen gesendet werden können.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine perspektivische Darstellung eines montierten Solarkollektors.
- Fig.2: zeigt den Solarkollektor aus Figur 1 ohne Deckel.
- Fig.3: ist eine perspektivische Darstellung montierter Klemmelemente zur Befestigung des Solarkollektors an einer Rohrleitung im Detail.
- Fig.4: ist ein Querschnitt durch die Anordnung aus Figur 3.
- Fig.5: ist eine Explosionsdarstellung der Anordnung aus Figur 3.
- Fig.6: ist eine perspektivische Darstellung der Anbindung des Gleitlagers an die Reflektoranordnung

### Beschreibung des Ausführungsbeispiels

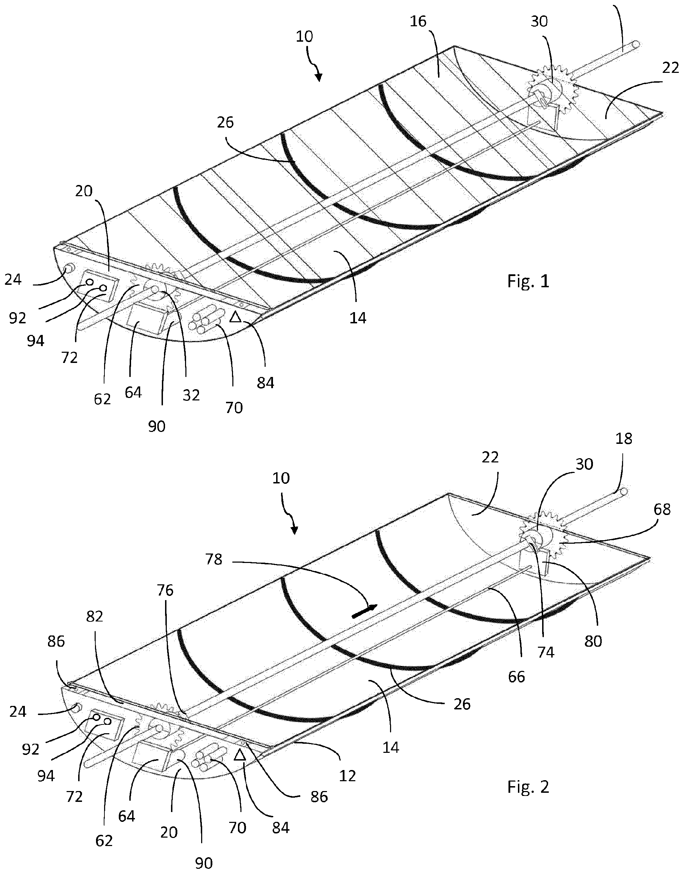

Figur 1 zeigt einen allgemein mit 10 bezeichneten Solarkollektor. Der Solarkollektor 10 ist Teil eines aus vielen solchen Solarkollektoren 10 bestehenden Solarkraftwerks. Eine mit 12 bezeichnete Reflektoranordnung weist einen innen mit Aluminium beschichteten Reflektor 14 und eine plane Abdeckung 16 aus transparentem Glas auf. Die Abdeckung 16 ist außen mit einer Antireflexbeschichtung und einer Antihaftbeschichtung versehen. Der Reflektor 14 ist gekrümmt und hat einen parabelförmigen Querschnitt. Parallele Sonnenstrahlung, die senkrecht auf die Abdeckung 16 fällt, wird in einer Brennlinie fokussiert. Auf diese Weise wird die gesamte einfallende Strahlung in einer Linie gebündelt. Im Bereich der Brennlinie ist eine Rohrleitung 18 angeordnet. Die Rohrleitung 18 besteht im vorliegenden Ausführungsbeispiel aus Kupfer als gut wärmeleitendem Material und wird im vorliegenden Ausführungsbeispiel mit Wasser durchströmt. Hierfür ist eine steuerbare Umwälzpumpe (nicht dargestellt) vorgesehen. Die Sonnenstrahlung wird an der einen Absorber bildenden Rohrleitung 18 absorbiert und in Wärmeenergie umgewandelt. Die Wärmeenergie wird in üblicher Weise durch das in der Rohrleitung 18 fließende Wasser zur weiteren Verwendung abgeführt. In Gebieten, bei denen Frostgefahr besteht, wird ein Fluid verwendet, welches auch bei niedrigeren Temperaturen nicht einfriert.

An seinen Stirnflächen ist der Reflektor mit Platten 20 und 22 versehen. Die Reflektoranordnung 12 bildet mit Reflektor 14, Platten 20, 22 und Abdeckung 16 einen geschlossenen Raum. Durch geeignete Dichtungen (nicht dargestellt) ist der von der Reflektoranordnung 12 umschlossene Raum gegen die Umgebung abgedichtet. In der Platte 20 an der Stirnfläche der Reflektoranordnung ist eine hydrophobe Membran 24, beispielsweise von OXYPHEN AG, Giessereistrasse 1, 8620 Wetzikon Schweiz, in eine Öffnung eingesetzt. Die Membran 24 ist für kleine Moleküle, insbesondere für Sauerstoffmoleküle O₂ und Stickstoffmoleküle N₂ durchlässig. Größere Wassermoleküle H₂O werden nur nach außen in Richtung der Umgebung durchgelassen. Wasser kann daher nicht in den Innenraum der Reflektoranordnung 12 eindringen. Über die hydrophobe Membran 24 kann ein Druckausgleich erfolgen. Eine Belastung der Dichtungen und Komponenten der Reflektoranordnung 12 erfolgt nicht. Es ist auch kein Vakuum erforderlich. Entsprechend kann die Glasabdeckung 16 dünn ausgeführt werden. Zusätzlich zur hydrophoben Membran 24 ist hygrophiles Material in Form von Salz im Innenraum angeordnet. Das Salz bindet jegliches in dem Innenraum vorhandene Wasser. Die getrocknete Luft im Innenraum der Reflektoranordnung 12 erlaubt keine Wasserkondensation an der Abdeckung oder Scheibe, so dass die Strahlung unabhängig von den Witterungs- und Temperaturbedingungen unbeeinträchtigt zur Rohrleitung geleitet wird.

Der Solarkollektor ist im vorliegenden Ausführungsbeispiel etwa 2 m lang. Der Reflektor 14 ist dünn um ein übermäßiges Gewicht zu vermeiden, welches Transport und Montage erschweren würde. Zur Erhaltung der Formstabilität des Reflektors 14 ist der Reflektor in einem Gerüst aus gekrümmten Spanten 26 und Längsstreben 28 gehalten. Die Längsstreben 28 haben eine T-Form und sind mit den Spanten 26 und den Platten 20, 22 des Reflektors verbunden.

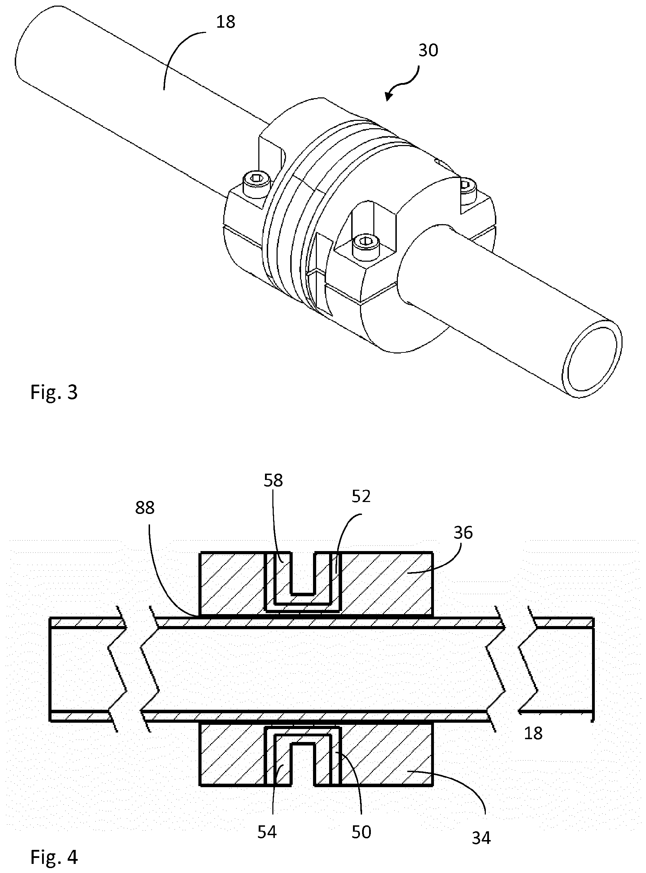

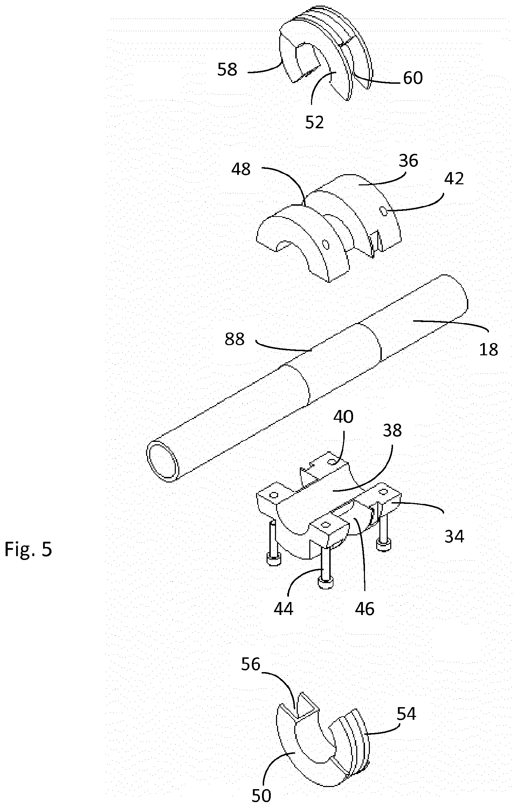

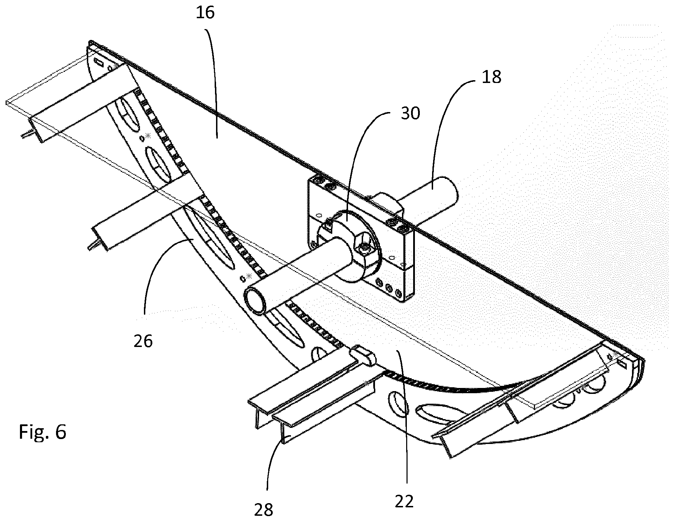

Die Reflektoranordnung 12 ist an der Rohrleitung 18 drehbeweglich befestigt. Hierzu sind zwei Gleitlager 30 und 32 vorgesehen, die in den Figuren 3 bis 6 im Detail dargestellt sind. Figur 3 ist eine perspektivische Darstellung und zeigt einen Abschnitt der Rohrleitung 18 mit montiertem Gleitlager 30. Das Gleitlager 30 umfasst ein unteres Klemmelement 34 und ein oberes Klemmelement 36. Dies ist in der Explosionsdarstellung in Figur 5 gut zu erkennen. Die Klemmelemente 34 und 36 sind halbschalenförmig. Sie bilden eine U-förmige Rinne 38, welche in montiertem Zustand an der Rohrleitung 18 anliegt. Zwischen den Klemmelementen und der Rohrleitung befindet sich eine Dichtung 88. Das Klemmelement 34 weist an jeder Ecke vier Bohrungen 40 auf. Durch die Bohrungen 40 werden Schrauben 44 geführt, die in Gewindebohrungen 42 im oberen Klemmelement 36 eingeschraubt werden. Auf diese Weise werden die Klemmelemente 34 und 36 fest an der Rohrleitung 18 befestigt, ohne dass diese aufgebrochen werden muss.

Die Klemmelemente 34 und 36 weisen jeweils eine breite Ringnut 46 und 48 auf. In der Ringnut 46 ist ein erstes Lagerelement 50 des Gleitlagers 30 angeordnet. In der Ringnut 48 ist ein komplementäres zweites Lagerelement 52 des Gleitlagers 30 angeordnet. Ein inneres Teil 54 des Lagerelements 50 ist in einer Aufnahme 56 beweglich geführt. Ein inneres Teil 58 des Lagerelementes 52 ist in einer Aufnahme 60 beweglich geführt. Das Gleitlager 32 ist identisch ausgeführt wie das Gleitlager 30. Auf diese Weise werden die Platten 22 und 20 der Reflektoranordnung 12 um die Längsachse der Rohrleitung 18 beweglich geführt.

Am Gleitlager 32 ist ein Zahnrad 62 befestigt. Das Zahnrad 62 wird durch ein Getriebe 64 bewegt. Dieses Getriebe überträgt die Antriebskraft eines Motors 90 auf das über ihm befindliche Gleitlager 32. Weiterhin wird mit dem Motor 90 eine Welle 66 angetrieben. Die Welle 66 erstreckt sich über die gesamte Länge des Solarkollektors 10. Am anderen Ende führt die Welle 66 in ein Getriebe 80, das in das Zahnrad 68 greift. Das Zahnrad 68 ist mit dem Gleitlager 30 verbunden. Auf diese Weise wird die Kraft des Motors 90 sowohl am Gleitlager 30 als auch am Gleitlager 32 ausgeübt. Der Motor 90 wird über Solarzellen 82 mit Energie versorgt. Zusätzlich sind Akkumulatoren 70 vorgesehen, welche die Energieversorgung auch in der Nacht oder bei ungünstigen Lichtverhältnissen sicherstellen.

Mit Betätigung des Motors 90 wird eine Nachführung der Reflektoranordnung 12 zur Bewegung der Sonne bewirkt. An der Platte 20 ist ein Beschleunigungssensor 84, z.B. LIS3DH von STMicroelectronics, befestigt. Der Beschleunigungssensor liefert Daten über die Lage der Reflektoranordnung an eine Steuerung 72. Die Steuerung errechnet aus der aktuellen Zeit, dem Datum und der Geoposition die Position der Sonne und steuert den Motor 90 derart, dass die Reflektoranordnung 12 eine optimale Position einnimmt, bei der die gesamte Sonnenstrahlung in der Brennlinie fokussiert wird. Die Verwendung eines Beschleunigungssensors hat den Vorteil gegenüber einer optischen Nachführung, dass die optimale Position auch dann gefunden wird, wenn die Lichtverhältnisse - etwa bei Bewölkung - keine eindeutige Bestimmung der Sonnenposition erlauben. Die Erfassung der Lichtintensität dient der eindeutigen Bestimmung des Sonnenganges über den Tag und das Jahr benötigt. Hierfür werden zwei Photodetektoren bzw. Fotosensoren 86 genutzt.

Mit dem Beschleunigungssensor 84 wird zusätzlich erfasst ob und in welchem Maße Vibrationen vorliegen. Bei starken Vibrationen, beispielsweise einer Überschreitung von 63 Hertz wird die Anordnung in eine Lage gefahren, bei welcher die Vibrationen nur noch ein Minimum betragen.

Weiterhin wird während der Bewegung der für die Drehbewegung benötigte Strom erfasst. Bei hohem Windwiderstand (Sturm) ist ein großer Strom für eine Bewegung erforderlich. Überschreitet der Windwiderstand einen Schwellwert, wird die Anordnung geschützt. Hierzu wird die Anordnung in eine Position bewegt, bei welcher der geringste Strom am Schrittmotor für eine Drehbewegung erforderlich ist. Mit anderen Worten: die Anordnung wird in eine Position gefahren, bei der der geringste Windwiderstand herrscht. Auf diese Weise wird die Anordnung bei Sturm gegen Beschädigung geschützt.

Zur Vermeidung von Verunreinigungen wird die Reflektoranordnung 12 nachts nach Sonnenuntergang kontinuierlich weitergedreht bis die Glasplatte unten angeordnet ist. Erst bei Sonnenaufgang wird die Reflektoranordnung 12 wieder in ihre Betriebsposition gebracht.

An den Klemmelementen der Gleitlager 30 und 32 sind Temperatursensoren 74 und 76 befestigt. Die Temperatursensoren 74 und 76 erfassen die Temperatur an der Rohrleitung 18. Mit dem Temperatursensor 74 wird beispielsweise die ausgangsseitige Temperatur und mit dem Temperatursensor 76 die eingangsseitige Temperatur erfasst, wenn das Fluid in Richtung des Pfeils 78 durch die Rohrleitung 18 fließt. Wenn eine oder beide Temperaturen einen maximalen Schwellwert, beispielsweise 300°C überschreiten, wird die Reflektoranordnung 12 bewegt, so dass weniger Sonnenstrahlung auf die Rohrleitung geleitet wird. Zusätzlich kann vorgesehen sein, dass die Pumpenleistung der Umwälzpumpe erhöht wird. Dadurch wird Überhitzung und Schädigung der Komponenten vermieden.

Der Temperatursensor 74 ist mit einem Wandler versehen. Der Wandler wandelt das Temperatursignal in ein optisches Lasersignal um. Das Lasersignal wird parallel zur Rohrleitungsachse zu einem Detektor (nicht dargestellt) auf der anderen Seite der Reflektoranordnung geleitet. Der Detektor erfasst das optische Signal, wandelt es in ein elektrisches Signal und schickt es mittels eines Senders drahtlos an die Steuerung 72.

Die gesamte Reflektoranordnung 12 wird werksseitig betriebsfähig vormontiert. Zur Installation vor Ort müssen lediglich die Klemmelemente 34 und 36 voneinander gelöst werden, die eine werksseitig montierte Rohratrappe umschloss. Gleichfalls wird die Glasplatte mit Ihrer Rahmenkonstruktion gelöst. Am Installationsort des Solarkollektors werden die genannten Komponenten erneut verschraubt. Weitere Montagearbeiten oder Justagearbeiten sind nicht erforderlich. Dadurch kann die Installation auch vom Laien durchgeführt werden. Qualifiziertes Personal ist nur im Werk erforderlich und braucht nicht an die weltweit verstreuten Montageorte zu reisen. Die Anordnung ist daher besonders wirtschaftlich bei der Herstellung und Montage. Durch die Verwendung geeigneter Sensoren werden Überhitzung und Sturmschäden vermieden. Dadurch ist die Anordnung besonders langlebig.

Der Solarkollektor wurde vorstehend unter Angabe von Abmessungen, Komponentenbezeichnungen, Befestigungsmethoden, Sensoren und Materialien genau beschrieben. Diese Angaben dienen nur zur Illustration der Erfindung und sollen den Erfindungsgedanken nicht beschränken. Andere Ausgestaltungen sind möglich ohne vom Erfindungsgedanken abzuweichen, dessen Umfang ausschließlich durch den Wortlaut der Ansprüche bezeichnet ist.

## Patentansprüche

1. Solarkollektor-Anordnung (10) enthaltend
(a) eine mit Solarenergie beaufschlagte Rohrleitung (18), durch welche eine Fluidströmung hindurchleitbar ist, so dass die Solarenergie auf das Fluid übertragbar ist, eine Heatpipe oder ein anderes energieabführendes System oder anderer Absorber;
(b) eine Reflektoranordnung (12) mit einem gekrümmten Reflektor (14) zum Bündeln von Sonnenstrahlung im Bereich der Rohrleitung (18), und
(c) einen Antrieb zum Nachführen der Reflektoranordnung (12) derart, dass die Sonnenstrahlung auf die Rohrleitung (12) reflektiert wird, wobei
(d) Mittel (30, 32) zum drehbeweglichen, lösbaren Befestigen der Reflektoranordnung (12) an der Rohrleitung (18) vorgesehen sind, **dadurch gekennzeichnet, dass**
(e) der Antrieb von einem Motor (90) gebildet ist, der an oder in der drehbeweglichen Reflektoranordnung (12) befestigt ist, wobei
(f) der Antrieb eine Steuerung und eine Stromversorgung mit der Reflektoranordnung ein Modul bilden, das werksseitig vollständig montiert werden kann und das als Ganzes an der fluiddurchflossenen Rohrleitung montiert werden kann.

2. Anordnung nach Anspruch 1, **dadurch gekennzeichnet, dass** die Mittel zum Befestigen der Reflektoranordnung (12) an der Rohrleitung (18) umfassen:
(a) ein erstes Klemmelement (34);
(b) ein zweites Klemmelement (36) zum Verbinden mit dem ersten Klemmelement (34), wobei die Reflektoranordnung (12) drehbeweglich gelagert ist.

3. Anordnung nach Anspruch 2, **dadurch gekennzeichnet, dass** das erste (34) und das zweite Klemmelement (36) halbringförmig ausgebildet sind und jeweils eine Ringnut (46, 48) aufweisen zur Aufnahme eines Lagerelements (50, 52) für die drehbewegliche Lagerung der Reflektoranordnung (12) um die Rohrleitung (18).

4. Anordnung nach einem der vorgehenden Ansprüche, **dadurch gekennzeichnet, dass** an jedem Ende der Reflektoranordnung Mittel (30, 32) zum lösbaren Befestigen der Reflektoranordnung an der Rohrleitung vorgesehen sind, die über eine Welle (66) miteinander verbunden sind, so dass die vom Antrieb auf die Reflektoranordnung ausgeübte Kraft teilweise über die Welle auf das andere Ende der Reflektoranordnung übertragbar ist.

5. Anordnung nach einem der vorgehenden Ansprüche, **gekennzeichnet durch** Solarzellen (82) zur Energieversorgung des Motors (90) und/oder der Steuerung (72).

6. Anordnung nach einem der vorgehenden Ansprüche, **gekennzeichnet, durch**
(a) jeweils ein Temperatursensor (74, 76) zur Erfassung der Temperatur an jedem Ende der Reflektoranordnung,
(b) einen an einem ersten Ende der Reflektoranordnung vorgesehenen Wandler mit einer Lichtquelle zur Umwandlung von Temperaturdaten des Temperatursensors an diesem Ende in ein optisches Signal,
(c) einen am gegenüberliegenden zweiten Ende der Reflektoranordnung angeordneten Detektor zum Empfang des optischen Signals, und
(d) einen Wandler mit einem Sender zur Übertragung von Temperaturdaten des ersten und zweiten Temperatursensors an eine Steuerung.

7. Anordnung nach einem der vorgehenden Ansprüche, **dadurch gekennzeichnet, dass** die Reflektoranordnung eine oder mehrere Längsverstärkungen parallel zur Rohrleitung und/oder Spanten quer zur Rohrleitung aufweist.

8. Anordnung nach einem der vorgehenden Ansprüche, **gekennzeichnet durch** einen Beschleunigungssensor (84) an der Reflektoranordnung.

9. Anordnung nach einem der vorgehenden Ansprüche, **dadurch gekennzeichnet, dass** die Reflektoranordnung mit dem Reflektor und einem lichtdurchlässigen Deckel (16) einen geschlossenen Raum umschließt und der Raum mit einer Membran (24) zur Außenumgebung versehen ist, welche Stickstoffmoleküle, Sauerstoffmoleküle und andere kleinere Gasmoleküle durchlässt, und für Wassermoleküle undurchlässig ist.

10. Anordnung nach Anspruch 10, **dadurch gekennzeichnet, dass** ein hygroskopisches Material in dem geschlossenen Raum vorgesehen ist.

11. Verfahren zum Betrieb einer Anordnung nach einem der vorgehenden Ansprüche, mit den Schritten:
(a) Ermitteln des Sonnenstands;
(b) Ausrichten der Reflektoranordnung; und
(c) Leiten eines Fluids durch die Rohrleitung zur Absorption von Sonnenwärme;
**dadurch gekennzeichnet, dass**
(d) die Reflektoranordnung bewegt wird,
(e) die Trägheit der Reflektoranordnung bei der Bewegung ermittelt wird, und
(f) die Reflektoranordnung bei Überschreiten eines Schwellwertes für die Trägheit in eine Lage bewegt wird, bei der die auf die Reflektoranordung wirkenden Kräfte ein Minimum annehmen.

12. Verfahren zum Betrieb einer Anordnung nach einem der vorgehenden Ansprüche 1 bis 10 unter Verwendung eines analogen oder digitalen Regelwerkes **dadurch gekennzeichnet, dass** ein mit Hilfe von Fotosensoren (86) ermittelter Sonnenstand gespeichert und mit den Messungen des Beschleunigungssensors (84) in Abhängigkeit der Tageszeit bzw. des Jahrestages verknüpft wird und damit die Reflektoranordnung anschließend ohne Messung der Sonnenstrahlung die richtige Position angefahren wird.

13. Verfahren zum Betrieb einer Anordnung nach einem der vorgehenden Ansprüche 1 bis 10 unter Verwendung einer Temperatur-Regelung **dadurch gekennzeichnet, dass** jeder Sonnenkollektor mit einer definierten Soll-Temperatur, die am Einlass (74) und Auslass (76) des Rohres (18) nicht überschritten werden darf, werkseitig voreingestellt wird und/oder am Einsatzort manuell eingestellt werden kann.

14. Verfahren zum Betrieb einer Anordnung nach einem der vorgehenden Ansprüche 1 bis 10 unter Verwendung eines Funkempfängers (94) in der Steuerung (72) **dadurch gekennzeichnet, dass** die Reflektoranordnung von außen prophylaktisch beim Überschreiten zu hoher Vibrationen oder zu starker Verdrehungskräfte, in einen Not-Betriebsmodus versetzt wird, bei dem der Solarkollektor mit seinem Deckel (16) nach unten ausgerichtet wird.

15. Verfahren zum Betrieb einer Anordnung nach einem der vorgehenden Ansprüche 1 bis 10 unter Verwendung eines Beschleunigungssensors (84) in der Steuerung (72) **dadurch gekennzeichnet, dass** die Reflektoranordnung bei Überschreiten zu hoher Vibrationen die Reflektoranordnung in eine Position gedreht wird, bei der die Vibrationen sich minimieren oder aufheben.

## Claims

1. Solar collector assembly (10) comprising
(a) a pipe (18) exposed to solar energy adapted to accommodate a fluid flow in such a way that the solar energy is transferred to the fluid, a heat pipe or any other energy guiding system or absorber;
(b) a reflector assembly (12) with a curved reflector (14) for focusing solar radiation in the range of the pipe (18), and
(c) an actuator (90,64, 80) for moving the reflector assembly (12) in a way that the solar radiation is reflected in the direction of the pipe (12),
wherein
(d) means (30, 32) are provided for rotatably, releasably fixing the reflector assembly (12) to the pipe (18)
**characterized in that**
(e) the actuator is a motor (90) which is fixed at the rotatable reflector assembly (12) or in the rotatable reflector assembly (12), wherein
(f) the actuator, a control means and a power supply form a module with the reflector assembly which can be fully assembled by the manufacturer and mounted in one piece at the pipe with the fluid flow.

2. Assembly according to claim 1, **characterized in that** the means for fixing the reflector assembly (12) to the pipe (18) comprise:
(a) a first clamping element (34);
(b) a second clamping element (36) for connecting to the first clamping element (34), wherein the reflector assembly (12) is rotatably mounted.

3. Assembly according to claim 2, **characterized in that** the first (34) and the second clamping element (36) are semi-circular and each has an annular groove (46, 48) for receiving a bearing element (50, 52) for rotatably mounting the reflector assembly (12) about the pipe (18).

4. Assembly according to any of the preceding claims, **characterized in that** means (30, 32) for releasably fixing the reflector assembly to the pipe are provided at each end of the reflector assembly, such means being connected by a shaft (66) in such a way that the force exerted by the actuator on the reflector assembly is partly transferred to the other end of the reflector assembly by the shaft.

5. Assembly according to any of the preceding claims, **characterized by** solar cells (82) for the energy supply for the actuator (90) and/or control means (72).

6. Assembly according to any of the preceding claims, **characterized by**
(a) a temperature sensor (74, 76) for sensing the temperature at each end of the reflector assembly;
(b) a converter provided at a first end of the reflector assembly the converter having a light source for converting temperature data of a temperature sensor a this end into an optical signal,
(c) a detector provided at the opposite, second end of the reflector assembly for receiving such optical signal, and
(d) a converter with a sender for transmitting the temperature data of the first and second temperature sensor to a control means.

7. Assembly according to any of the preceding claims, **characterized in that** the reflector assembly is provided with one or more reinforcements extending parallel and/or lateral to the pipe.

8. Assembly according to any of the preceding claims, **characterized by** an acceleration sensor (84) provided at the reflector assembly.

9. Assembly according to any of the preceding claims, **characterized in that** the reflector assembly surrounds a closed space with the reflector and a transparent cover (16) and the space is provided with a diaphragm (24) bordering to the outside, the diaphragm adapted to be permeable for nitrogen molecules, oxygen molecules and other small gas molecules and impermeable for water molecules.

10. Assembly according to claim 9, **characterized in that** a hygroscopic material is enclosed in the closed space.

11. Method for operating an assembly according to any of the preceding claims, comprising the steps of:
(a) Determining the position of the sun;
(b) adjusting the reflector assembly; and
(c) flowing a fluid through the pipe for absorption of solar heat;
**characterized in that**
(d) the reflector assembly is moved,
(e) the inertia of the reflector assembly is determined during such movement, and
(f) the reflector assembly is moved into a position where the forces acting on the reflector assembly are a minimum if the inertia exceeds a selected threshold.

12. Method for operating an assembly according to any of the preceding claims 1 to 10, using an analogue or digital set of rules, **characterized in that** the position of the sun determined with photo sensors (86) is stored and combined with measurements of the acceleration sensor (84) depending on the time of the day and/or time of the year and that thereby the reflector assembly is moved to the correct position without measuring any solar radiation.

13. Method for operating an assembly according to any of the preceding claims 1 to 11, using a temperature control means, **characterized in that** each solar collector is preadjusted by the manufacturer and/or manually adjusted at the point of use to a well-defined target temperature which may not be exceeded at the inlet (74) and outlet (76) of the pipe (18).

14. Method for operating an assembly according to any of the preceding claims 1 to 10, using a radio receiver (94) in the control means (72), **characterized in that** the reflector assembly can externally be transferred into an emergency operation mode upon exceeding too high vibrations or too high rotational forces where the solar collector is downwardly directed with the cover (16).

15. Method for operating an assembly according to any of the preceding claims 1 to 10, using an acceleration sensor (84) in the control means (72), **characterized in that** the reflector assembly is rotated into a position where vibrations are minimized or compensated upon exceeding too high vibrations.

## Revendications

1. Disposition de capteur solaire (10) comprenant
(a) une conduite de tuyau (18) à laquelle est appliquée l'énergie solaire et à travers laquelle peut être guidé un courant de fluide de sorte que l'énergie solaire peut être transmise au fluide, un caloduc ou tout autre système de dissipation d'énergie ou tout autre absorbant ;
(b) une disposition de réflecteur (12) munie d'un réflecteur incurvé (14) destiné à focaliser le rayonnement solaire dans la zone de la conduite de tuyau (18), et
(c) un dispositif d'entraînement destiné à orienter la disposition de réflecteur (12) de sorte que le rayonnement solaire est réfléchi sur la conduite de tuyau (12) ;
pour laquelle
(d) il est prévu des moyens (30, 32) destinés à fixer la disposition de réflecteur (12) à la conduite de tuyau (18) en pouvant la détacher et effectuer un déplacement rotatif,
**caractérisée en ce que**
(e) le dispositif d'entraînement est formé d'un moteur (90) fixé à ou dans la disposition de réflecteur (19) pouvant effectuer un déplacement rotatif,
(f) le dispositif d'entraînement, un dispositif de commande et un dispositif d'alimentation en courant électrique formant avec la disposition de réflecteur un module pouvant être entièrement assemblé en usine et monté d'une seule pièce sur la conduite de tuyau traversée par le fluide.

2. Disposition selon la revendication 1, **caractérisée en ce que** les moyens destinés à fixer la disposition de réflecteur (12) à la conduite de tuyau (18) comprennent :
(a) un premier élément de serrage (34) ;
(b) un second élément de serrage (36) destiné à la connexion au premier élément de serrage (34), la disposition de réflecteur (12) étant logée en pouvant effectuer un déplacement rotatif.

3. Disposition selon la revendication 2, **caractérisée en ce que** le premier (34) et le second (36) élément de serrage sont configurés sous forme de demi-cercle et présentent chacun une rainure annulaire (46, 48) destinée à accueillir un élément de palier (50, 52) destiné à loger la disposition de réflecteur (12) de sorte qu'elle puisse tourner autour de la conduite de tuyau (18).

4. Disposition selon l'une quelconque des revendications précédentes, **caractérisée en ce qu'**à chaque extrémité de la disposition de réflecteur, il est prévu des moyens (30, 32) destinés à fixer la disposition de réflecteur à la conduite de tuyau en pouvant la détacher qui sont reliés l'un à l'autre par un arbre (66) de sorte que la force exercée sur la disposition de réflecteur par le dispositif d'entraînement peut être transmise partiellement par l'intermédiaire de l'arbre à l'autre extrémité de la disposition de réflecteur.

5. Disposition selon l'une quelconque des revendications précédentes, **caractérisée par** des cellules solaires (82) destinées à alimenter en énergie le moteur (90) et/ou le dispositif de commande (72).

6. Disposition selon l'une quelconque des revendications précédentes, **caractérisée par**
(a) à chaque fois un capteur de température (74, 76) destiné à saisir la température à chaque extrémité de la disposition de réflecteur,
(b) un convertisseur prévu à une première extrémité de la disposition de réflecteur et muni d'une source de lumière, qui est destiné à convertir les données de température du capteur de température à cette extrémité-là en signal optique,
(c) un détecteur disposé à la seconde extrémité opposée de la disposition de réflecteur et destiné à recevoir le signal optique, et
(d) un convertisseur muni d'un récepteur destiné à transmettre des données de température du premier et du second capteur de température à un dispositif de commande.

7. Disposition selon l'une quelconque des revendications précédentes, **caractérisée en ce que** la disposition de réflecteur présente un ou plusieurs renforcements longitudinaux parallèlement à la conduite de tuyau et/ou des côtes perpendiculairement à la conduite de tuyau.

8. Disposition selon l'une quelconque des revendications précédentes, **caractérisée par** un capteur d'accélération (84) se trouvant sur la disposition de réflecteur.

9. Disposition selon l'une quelconque des revendications précédentes, **caractérisée en ce que** la disposition de réflecteur avec le réflecteur et un couvercle (16) perméable à la lumière entoure un espace fermé et l'espace est prévu avec une membrane (24) par rapport à l'environnement extérieur qui laisse passer les molécules d'azote, les molécules d'oxygène et toute autre molécule gazeuse plus petite et qui ne laisse pas passer les molécules d'eau.

10. Disposition selon la revendication 10, **caractérisée en ce qu'**un matériau hygroscopique est prévu dans l'espace fermé.

11. Procédé destiné à exploiter une disposition selon l'une quelconque des revendications précédentes, présentant les étapes de :
(a) détermination de la position du soleil ;
(b) orientation de la disposition de réflecteur ; et
(c) guidage d'un fluide à travers la conduite de tuyau en vue de l'absorption de la chaleur solaire ;
**caractérisé en ce que**
(d) la disposition de réflecteur est déplacée,
(e) l'inertie de la disposition de réflecteur est déterminée lors du déplacement de celle-ci, et
(f) la disposition de réflecteur est déplacée lors du dépassement d'une valeur seuil pour l'inertie dans une position pour laquelle les forces agissant sur la disposition de réflecteur sont au minimum.

12. Procédé destiné à l'exploitation d'une disposition selon l'une quelconque des revendications précédentes 1 à 10 en utilisant des règles analogiques ou numériques, **caractérisé en ce qu'**une position du soleil déterminée à l'aide de photodétecteurs (86) est mémorisée et associée aux mesures du capteur d'accélération (84) en fonction de l'heure et du jour respectivement et ainsi, la disposition de réflecteur se met pour finir dans la bonne position sans que le rayonnement solaire ait été mesuré.

13. Procédé destiné à l'exploitation d'une disposition selon l'une quelconque des revendications précédentes 1 à 10 en utilisant un dispositif de réglage de la température, **caractérisé en ce que** chaque capteur solaire est préréglé en usine sur une température de consigne définie ne devant pas être dépassée à l'entrée (74) et à la sortie (76) du tuyau (18), et/ou peut être réglé manuellement sur site.

14. Procédé destiné à l'exploitation d'une disposition selon l'une quelconque des revendications précédentes 1 à 10 en utilisant un récepteur radio (94) situé dans le dispositif de commande (72), **caractérisé en ce que,** lors du dépassement de vibrations trop élevées ou de forces de torsion trop fortes, la disposition de réflecteur est mise depuis l'extérieur à titre préventif en mode d'exploitation d'urgence dans lequel le capteur solaire et son couvercle (16) sont orientés vers le bas.

15. Procédé destiné à l'exploitation d'une disposition selon l'une quelconque des revendications précédentes 1 à 10 en utilisant un capteur d'accélération (84) situé dans le dispositif de commande (72), **caractérisé en ce que,** lors du dépassement de vibrations de la disposition de réflecteur trop élevées, la disposition de réflecteur est tournée dans une position dans laquelle les vibrations diminuent ou sont supprimées.
